Europäisches Patentamt

European Patent Office

Office européen des brevets

(11) Veröffentlichungsnummer : **0 038 983
B1**

# EUROPÄISCHE PATENTSCHRIFT

(45) Veröffentlichungstag der Patentschrift :
25.07.84

(51) Int. Cl.³ : **C 08 G 65/30, B 01 D 17/04**

(21) Anmeldenummer : **81102791.1**

(22) Anmeldetag : **11.04.81**

(54) **Verfahren zur Aufarbeitung von Polyetherpolyolen.**

(30) Priorität : **25.04.80 DE 3016113**

(43) Veröffentlichungstag der Anmeldung :
**04.11.81 Patentblatt 81/44**

(45) Bekanntmachung des Hinweises auf die Patenterteilung : **25.07.84 Patentblatt 84/30**

(84) Benannte Vertragsstaaten :
**BE DE FR GB IT NL**

(56) Entgegenhaltungen :
**DE-C-   828 839
FR-A- 1 488 686
US-A- 3 715 402
US-A- 3 823 145
US-A- 4 129 718**

(73) Patentinhaber : **BAYER AG
Konzernverwaltung RP Patentabteilung
D-5090 Leverkusen 1 Bayerwerk (DE)**

(72) Erfinder : **Hetzel, Hartmut, Dr.
Lübecker Strasse 13
D-5000 Köln 40 (DE)**
Erfinder : **Gupta, Pramod, Dr.
Langemarckstrasse 27
D-5152 Bedburg/Erft (DE)**
Erfinder : **Nast, Roland, Dr.
Saarwerdenstrasse 47
D-4047 Dormagen 5 (DE)**
Erfinder : **Echterhof, Herbert
Stettiner Strasse 4
D-5140 Erkelenz (DE)**
Erfinder : **Brocker, Ulrich, Dr.
Rösrather Strasse 68/70
D-5000 Köln 91 (DE)**

EP 0 038 983 B1

Jouve, 18, rue St-Denis, 75001 Paris, France

## Beschreibung

Die vorliegende Erfindung betrifft ein neuartiges Verfahren zur Entfernung von alkalischen Katalysatoren aus durch basisch katalysierte Alkoxylierungsreaktionen hergestellten Polyetherpolyolen.

Polyalkylenoxidpolyether werden in der Praxis hauptsächlich als Ausgangskomponenten für die Herstellung von gegebenenfalls verschäumten Polyurethankunststoffen eingesetzt. Die Polyether werden dabei, gegebenenfalls stufenweise sowie gegebenenfalls unter Zusatz von Additiven, mit Polyisocyanaten zur Reaktion gebracht. Um die Polyisocyanat-Polyadditionsreaktion nicht nachteilig zu beeinflussen und um das Eigenschaftsbild der Polyurethankunststoffe nicht zu beeinträchtigen, ist es im allgemeinen erforderlich, daß die Polyetherpolyole weitgehend frei von chemischen Verunreinigungen sind.

Großtechnisch werden Polyetherpolyole meist durch Anlagerung von Alkylenoxiden (insbesondere Propylenoxid und/oder Ethylenoxid) an Starterverbindungen mit aciden Wasserstoffatomen (z. B. Wasser, Polyalkohole oder Polyamine) in Gegenwart von basischen Substanzen (in der Regel Alkalihydroxiden) als Katalysator hergestellt. Die übliche Katalysatorkonzentration beträgt dabei ca. 0,1 bis 1,0 Gew.-% (1 000 bis 10 000 ppm). Nach Abschluß der Alkoxylierungsreaktion müssen die Polyetherpolyole dann aus den oben erwähnten Gründen — vor allem bei einer Weiterverarbeitung zusammen mit Toluylendiisocyanat — so aufgearbeitet werden, daß die Konzentration der basischen Substanzen im Fertigprodukt möglichst auf die Größenordnung von etwa 0,000 5 % (5 ppm) oder noch darunter reduziert wird (siehe US-A-4 129 718).

Bei einem der in der Praxis üblichen Aufarbeitungsverfahren wird der basische Katalysator (z. B. KOH) aus dem alkalischen Polymerisat in mehreren Verfahrensschritten entfernt: Zunächst wird das Polymerisat (z. B. mit verdünnter Schwefelsäure) neutralisiert, wonach die Hauptmenge Wasser unter gleichzeitiger Kristallisation der anorganischen Salze (z. B. Kaliumsulfat) abdestilliert wird. Das ausgefallene Salz wird abfiltriert, worauf das restliche Wasser abdestilliert und die Restmenge Salz durch Filtration entfernt wird.

Die Nachteile dieser bekannten Neutralisationsverfahren werden in der Einleitung der US-A-3 833 669 eingehend diskutiert. Die wesentlichen Probleme sind Schwierigkeiten bei der Filtration des oft sehr feinteiligen Salzes und auch der hohe Energie- und Chemikalienverbrauch.

Ein anderes, in der Praxis großtechnisch angewandtes Verfahren zur Polyetheraufarbeitung besteht darin, den Katalysator aus dem alkalischen Polymerisat durch Adsorption, beispielsweise mittels eines synthetischen Magnesiumsilikats (US-A-4 029 879) zu entfernen. Nachteilig ist bei dieser Arbeitsweise (siehe US-A-3 715 402 und US-A-4 129 718), daß oxidative Schädigungen des Polyols auftreten können und daß das Verfahren wegen des hohen Bedarfs an Adsorbentien bzw. wegen des relativ hohen Aufwands bei der Wiederaufarbeitung des Adsorptionsmittels nicht sehr wirtschaftlich ist.

Der Erfindung liegt somit die Aufgabe zugrunde, unter Vermeidung der beschriebenen Schwierigkeiten ein neues, einfaches und wirtschaftliches Verfahren zur Verfügung zu stellen, welches die weitgehende Entfernung von alkalischen Katalysatoren aus Polyetherpolyolen unter Rückgewinnung der Hauptmenge des Katalysators gestattet. Diese Aufgabe wird mittels des erfindungsgemäßen Verfahrens gelöst.

Gegenstand der vorliegenden Erfindung ist ein Verfahren zur Entfernung von Alkali aus durch basisch katalysierte Polyaddition von Alkylenoxiden hergestellten Polyetherpolyolen, welches dadurch gekennzeichnet ist, daß man

a) dem alkalischen Polymerisat 1 bis 20 Gew.-%, bevorzugt 2 bis 10 Gew.-%, Wasser sowie gegebenenfalls 0 bis 30 Gew.-%, vorzugsweise 3 bis 10 Gew.-%, bezogen auf Polymerisat, eines inerten organischen Lösungsmittels zusetzt,

b) die so gebildete Emulsion, ohne oder nur unter mäßigem Rühren, mindestens eine halbe Stunde, bevorzugt 2 bis 6 Stunden, bei einer Temperatur von mindestens 70 °C, bevorzugt 85 bis 130 °C, hält,

c) die wäßrige Phase abtrennt,

d) Restmengen von Alkali aus der organischen Phase in an sich bekannter Weise durch Zusatz von Säuren oder Adsorbentien entfernt und das restliche Wasser und das gegebenenfalls mitverwendete organische Lösungsmittel abdestilliert, wobei vorzugsweise in den Stufen a) bis d) unter Inertgas-Atmosphäre (insbesondere Stickstoff) gearbeitet wird.

Das erfindungsgemäße Verfahren ist auf alle in der Praxis üblichen Polyetherpolyole auf Basis von Ethylen-, Propylen-, Butylenoxid und deren Gemische anwendbar, sofern sie mit Wasser nicht vollständig mischbar sind, d. h. nach Zusatz von 2 bis 10 % Wasser zum Rohpolyether eine Emulsion ergeben. Dies ist in der Regel bei kurzkettigen Polyethern (Molekulargewicht ca. 300) dann der Fall, wenn sie kein Ethylenoxid enthalten, bei mittleren Molekulargewichten von ca. 4 000, wenn sie weniger als ca. 20 % Ethylenoxid enthalten und bei höhermolekularen (MG ca. 20 000) bei Ethylenoxidgehalten unter ca. 40 %.

In der ersten Stufe des erfindungsgemäßen Verfahrens wird dem alkalischen Polymerisat, gegebenenfalls nach vorheriger Viskositätsverminderung durch Zugabe einer gewissen Menge eines inerten, organischen Lösungsmittels (vorzugsweise Toluol), bei Temperaturen oberhalb 70 °C die oben angegebene Menge Wasser unter Rühren zugesetzt. Es bildet sich sofort eine milchig-trübe, stabile Emulsion. Ein Absetzen oder Aufrahmen ist zunächst nicht zu beobachten. Selbst wenn die Emulsion in einer Zentrifuge über 15 Minuten einer Zentrifugalbeschleunigung von 4 000 g ausgesetzt wird, ist keine Trennung von wäßriger und organischer Phase zu erkennen.

Ein erfindungswesentlicher Schritt besteht darin, die in der ersten Stufe des erfindungsgemäßen Verfahrens erhaltene Emulsion ohne oder unter mäßigem Rühren mindestens 1/2 Stunde, bevorzugt 2 bis 6 Stunden einer Temperatur von mindestens 70 °C, vorzugsweise 85 bis 130 °C, auszusetzen. Durch diese Wärmebehandlung wird die Stabilität der Emulsion soweit herabgesetzt, daß eine anschließende nahezu quantitative Auftrennung von wäßriger und organischer Phase möglich wird. Obwohl die organische Phase nach der Phasentrennung wegen der Hydrophilie des Polyethers noch etwa 2 Gew.-% Wasser enthält, ist überraschenderweise praktisch die Gesamtmenge an Alkali in der wäßrigen Phase angereichert.

Die Trennung von wäßriger und organischer Phase der Emulsion kann beispielsweise in an sich bekannter Weise unter den Einfluß der Schwerkraft (Absetzen), unter dem Einfluß elektrischer Felder oder auch unter dem Einfluß von Zentrifugalkräften (Hydrozyklon oder Zentrifuge) erfolgen (in Analogie zu den in US-A-3 715 402 beschriebenen Verfahren). Besonders bevorzugt ist es jedoch, die beiden Phasen mittels einer nachstehend näher beschriebenen Koalisiervorrichtung zu trennen. Es gelingt auf diese Weise, den Restbasengehalt im Polyether auf unter 100 ppm zu bringen. Die Abscheidegrade betragen für Absetzen zwischen 65 % und 96 %, für Zentrifugieren zwischen 86 % und 97 % und für Koalisieren zwischen 98 % und 99 %.

Die erfindungsgemäß bevorzugte Koalisiervorrichtung besteht aus einem aus Fasern aufgebauten Flächengebilde, wobei die Fasern möglichst fein und gegenüber Laugen beständig sein sollen. Vorzugsweise liegt ihre Dicke unter 50 µm, besonders bevorzugt zwischen 1 und 10 µm. Die Dicke der Faserschicht soll vorzugsweise zwischen 1 und 100 mm betragen, entsprechend einem Flächengewicht von ca. 100 bis 10 000 g/m². Bewährt haben sich z. B. Matten aus Mineralfasern (z. B. Asbest) oder aus leicht gesintertem alkalibeständigen Metallvlies (z. B. aus Nickelfasern), die bei einer Dicke von ca. 5 bis 10 mm ein Flächengewicht von 750 g/m² aufweisen. Die Durchflußgeschwindigkeit der Emulsion durch die Fasermatte liegt zweckmäßigerweise zwischen etwa 1 und 20 m/h. Selbstverständlich können auch Fasermaterialien aus alkalibeständigen Kunststoffen (z. B. Teflon) eingesetzt werden.

Der in dieser Weise behandelte Polyether bildet mit der abgeschiedenen wäßrig-alkalischen Phase eine scharfe Phasengrenze und läßt sich somit leicht abtrennen. Die Endbehandlung des abgeschiedenen Polyetherpolyols kann dann leicht auf bekanntem Weg durch Zusatz von Säure oder Adsorbentien, Filtration und Destillation erfolgen, um restliche Spuren von Alkali, Wasser und Lösungsmittel zu entfernen. Selbstverständlich ist es aber auch möglich, das erfindungsgemäße Verfahren an dem abgeschiedenen Polyol ein weiteres Mal auszuführen. Die abgetrennte wäßrige Alkalihydroxidlösung kann aufkonzentriert, gereinigt und entweder wieder als Katalysator für die Alkoxylierungsreaktion oder für andere Zwecke eingesetzt werden.

Das erfindungsgemäße Verfahren bietet gegenüber dem Stand der Technik folgende wesentliche Vorteile :

Geringer Energieverbrauch (Destillation nur in sehr gegrenzten Umfang erforderlich) ;
geringer oder überhaupt kein Salzanfall ;
kaum Schwierigkeiten mit Filtration ;
geringer Chemikalienverbrauch (Katalysator kann zurückgewonnen werden ; nur geringer Verbrauch von Säure bzw. Adsorbentien).

Die nachfolgenden Beispiele dienen zur Erläuterung des erfindungsgemäßen Verfahrens. Wenn nicht anders vermerkt, sind Mengenangaben als Gewichtsteile bzw. Gewichtsprozentene zu verstehen.

Beispiel 1

6 130 g alkalisches Polymerisat (trifunktioneller Polyether auf Basis Trimethylolpropan, alkoxiliert mit Ethylenoxid und Propylenoxid ; OH-Zahl 35) mit einem Katalysatorgehalt von 3 600 ppm Kalium (entsprechend ca. 5 200 ppm KOH) werden in einem 10 l-Rundkolben vorgelegt, mit 527 g Toluol versetzt und unter Stickstoffatmosphäre auf 100 °C aufgeheizt. Der Lösung werden 245,2 g Wasser (4 %, bezogen auf den Polyether) zugesetzt und die Flüssigkeit 5 min lang bei einer Rührerdrehzahl von 500 U/min intensiv emulgiert. Im Anschluß hieran wird die Rührerdrehzahl auf 30 U/min reduziert und die Emulsion 3 Stunden auf der Temperatur von 100 °C gehalten. Die ursprünglich milchig-weiße Emulsion nimmt dabei ein gelblich-opakes Aussehen an.

Die Emulsion ist nun entstabilisiert und kann durch Absetzen, Zentrifugieren oder Koalisieren bei ca. 90 °C in eine wäßrige und eine organische Phase getrennt werden.

a) Absetzen

100 ml der entstabilisierten Emulsion werden dem Rundkolben entnommen und in einem Glasgefäß ruhig gestellt. Es setzt sich am Boden des Glasgefäßes eine klare Flüssigkeit (Kalilauge) ab, die eine scharfe Trennschicht zur organischen Phase bildet. Die Analyse der trüben organischen Phase ergibt einen Restbasengehalt von 1 799 ppm KOH.

b) Zentrifugieren

100 ml der entstabilisierten Emulsion werden in ein Becherglas gegeben und in einer Zentrifuge 15 min. einer Zentrifugalbeschleunigung von 4 000 g ausgesetzt. Es bilden sich dabei zwei Phasen mit scharfer Trennschicht ; der Restbasengehalt der organischen Phase beträgt 732 ppm KOH.

## c) Koalisieren

Der Rest der entstabilisierten Emulsion wird mittels einer Zahnraddosierpumpe durch ein Glasrohr gedrückt, in das eine Koalisiermembran eingespannt ist. Die Koalisiermembran besteht aus einer leicht gesinterten Metallvliesmatte mit einer Dicke von ca. 8 mm bei einem Flächengewicht von 750 g/m². Das Metallvlies besteht seinerseits aus Edelstahlfasern mit einer Dicke von 4 μm.

Nach Passieren der Koalisiermembran (Durchmesser 80 mm) bei einem Durchsatz von 10 l/h (entsprechend einer Durchflußgeschwindigkeit von 0,055 m/s) trennt sich die wäßrige Phase von der fast klaren organischen ab. Der Restbasengehalt des Polyethers beträgt 83 ppm KOH.

## Beispiel 2

5 280 g alkalisches Polymerisat (trifunktioneller Polyether auf Basis Glycerin, alkoxiliert mit Ethylenoxid und Propylenoxid ; OH-Zahl 56) mit einem Katalysatorgehalt von 4 600 ppm Kalium (entsprechend 6 600 ppm KOH) werden in einem 10 l-Rundkolben vorgelegt und unter Stickstoffatmosphäre auf 100 °C aufgeheizt. Der Flüssigkeit werden 264 g (5 %) Wasser unter 5 min. langem Rühren bei einer Drehzahl von 500 U/min zugesetzt. Im Anschluß hieran wird die Rührerdrehzahl auf 50 U/min reduziert und die entstandene Emulsion 3 Stunden auf einer Temperatur von 100 °C gehalten. Die ursprünglich milchig-weiße Emulsion nimmt dabei ein gelblich-opakes Aussehen an.

Die Emulsion ist nun entstabilisiert. Eine dem Kolben entnommene Probe hat nach zweistündigem Absetzen einen Restbasengehalt von 1 664 ppm KOH. Die übrige Menge der Emulsion wird wie im Beispiel 1c durch eine Koalisiermembran gedrückt. Nach dem Passieren der Koalisiermembran tritt wiederum Phasentrennung ein, wobei der Restbasengehalt der organischen Phase nur 46 ppm KOH beträgt.

## Beispiel 3

Mit 6 600 g alkalischem Polymerisat (trifunktioneller Polyether auf Basis Trimethylolpropan, alkoxiliert mit Ethylenoxid ; OH-Zahl 35) mit einem Katalysatorgehalt von 3 600 ppm Kalium (entsprechend ca. 5 200 ppm KOH) wird Beispiel 1 wiederholt, wobei jedoch ohne Toluolzusatz gearbeitet wird.

a) Absetzen (3 Stunden) : 211 ppm Rest-KOH
b) Zentrifugieren : 173 ppm Rest-KOH
c) Koalisieren : 88 ppm Rest-KOH

## Beispiel 4 (Vergleich)

6 600 g alkalisches Polymerisat vom gleichen Typ wie in Beispiel 1 werden in einem 10 l-Rundkolben vorgelegt und unter Stickstoffatmosphäre auf 50 °C aufgeheizt. Dieser Flüssigkeit werden unter 5 min. dauerndem intensiven Rühren mit einer Rührerdrehzahl von 500 U/min 240 g Wasser zugesetzt. Im Anschluß hieran wird die Rührerdrehzahl auf 50 U/min. reduziert und die Temperatur der Emulsion auf 50 °C gehalten. Auch nach 10 h ändert sich die milchig-weiße Farbe der Emulsion nicht, sie bleibt stabil. Eine Phasentrennung ist weder durch Absetzen noch durch Zentrifugieren oder Koalisieren möglich.

## Beispiel 5

6 000 g alkalisches Polymerisat (bifunktioneller Polyether auf Basis Propylenglykol, alkoxiliert mit Propylenoxid ; OH-Zahl 56) mit einem Katalysatorgehalt von 3 200 ppm Kalium (entsprechend 4 600 ppm KOH) werden in einem 10 l-Rundkolben vorgelegt und unter Stickstoffatmosphäre auf 100 °C aufgeheizt. Der Flüssigkeit werden 300 g (5 %) Wasser unter 5 min. dauerndem intensiven Rühren mit einer Rührerdrehzahl von 500 U/min zugesetzt. Im Anschluß hieran wird die Rührerdrehzahl wieder auf 50 U/min reduziert und die gebildete Emulsion 5 h auf einer Temperatur von 100 °C gehalten. Die ursprünglich milchig-weiße Emulsion nimmt dabei ein gelblich-opakes Aussehen an. Die nun entstabilisierte Emulsion wird wie in Beispiel 1c durch eine Koalisiermembran gedrückt. Nach dem Passieren der Koalisiermembran tritt Phasentrennung ein ; der Restbasengehalt der organischen Phase beträgt nur 42 ppm KOH.

## Ansprüche

1. Verfahren zur Entfernung von Alkali aus durch basisch katalysierte Polyaddition von Alkylenoxiden hergestellten Polyetherpolyolen, dadurch gekennzeichnet, daß man
a) dem alkalischen Polymerisat 1 bis 20 Gew.-% Wasser sowie 0 bis 30 Gew.-% eines inerten organischen Lösungsmittels zusetzt,
b) die so gebildete Emulsion, ohne oder nur unter sehr mäßigem Rühren mindestens 1/2 Stunde bei einer Temperatur von mindestens 70 °C hält,
c) die wäßrige Phase abtrennt,
d) Restmengen von Alkali aus der organischen Phase in an sich bekannter Weise durch Zusatz von Säuren oder Adsorbentien entfernt und das gegebenenfalls mitverwendete organische Lösungsmittel und das restliche Wasser abdestilliert.

2. Verfahren nach Anspruch 1, dadurch gekennzeichnet, daß dem alkalischen Polymerisat in der ersten Verfahrensstufe 2 bis 10 Gew.-% Wasser zugesetzt werden.

3. Verfahren nach Anspruch 1 und 2, dadurch gekennzeichnet, daß in der ersten Verfahrensstufe neben Wasser 0 bis 30 Gew.-%, bezogen auf Polymerisat, an Toluol zugesetzt werden.

4. Verfahren nach Anspruch 1 bis 3, dadurch gekennzeichnet, daß die Emulsion in der zweiten Verfahrensstufe bei einer Temperatur von 85 bis 130 °C gehalten wird.

5. Verfahren nach Anspruch 1 bis 4, dadurch gekennzeichnet, daß in der dritten Verfahrensstufe die beiden Phasen durch Absetzen oder unter dem Einfluß von Zentrifugalkräften getrennt werden.

6. Verfahren nach Anspruch 1 bis 4, dadurch gekennzeichnet, daß in der dritten Verfahrensstufe die beiden Phasen durch Durchleiten der Emulsion durch ein aus sehr feinen Fasern aufgebautes Flächengebilde mit einem Flächengewicht zwischen 100 und 10 000 g/m² und einer Dicke zwischen 1 und 100 mm getrennt werden.

7. Verfahren nach Anspruch 6, dadurch gekennzeichnet, daß die Fasern des Flächengebildes eine Dicke unter 50 μm aufweisen.

8. Verfahren nach Anspruch 7, dadurch gekennzeichnet, daß die Fasern eine Dicke von 1 bis 10 μm aufweisen.

9. Verfahren nach Anspruch 6 bis 8, dadurch gekennzeichnet, daß die Durchflußgeschwindigkeit der Emulsion durch das Faser-Flächengebilde 1 bis 20 m/h beträgt.

10. Verfahren nach Anspruch 6 bis 9, dadurch gekennzeichnet, daß das Flächengebilde aus Metall- oder Mineralfasern aufgebaut ist.

**Claims**

1. Process for removing alkali from polyether polyols produced by the base-catalysed polyaddition of alkylene oxides, characterised in that

a) 1 to 20 % by weight of water and 0 to 30 % by weight of an inert organic solvent are added to the alkaline polymer,

b) the emulsion thus formed is maintained at a temperature of at least 70 °C for at least half an hour without stirring or with only very moderate stirring,

c) the aqueous phase is separated off,

d) residual quantities of alkali are removed from the organic phase in a manner known per se by the addition of acids or adsorbents and the organic solvent used, if any, and the residual water are distilled off.

2. Process according to Claim 1, characterised in that 2 to 10 % by weight of water are added to the alkaline polymer in the first stage of the process.

3. Process according to Claim 1 and 2, characterised in that, in addition to water, 0 to 30 % by weight, based on the polymer, of toluene are added in the first stage of the process.

4. Process according to Claim 1 to 3, characterised in that the emulsion is maintained at a temperature of 85 to 130 °C in the second stage of the process.

5. Process according to Claim 1 to 4, characterised in that, in the third stage of the process, the two phases are separated by sedimentation or under the effect of centrifugal forces.

6. Process according to Claim 1 to 4, characterised in that, in the third stage of the process, the two phases are separated by passing the emulsion through a sheet-form structure composed of very fine fibres and having a weight per unit area of between 100 and 10,000 g/m² and a thickness of between 1 and 100 mm.

7. Process according to Claim 6, characterised in that the fibres of the sheet-form structure have a thickness of less than 50 μm.

8. Process according to Claim 7, characterised in that the fibres have a thickness of 1 to 10 μm.

9. Process according to Claim 6 to 8, characterised in that the rate of flow of the emulsion through the fibrous sheet-form structure is 1 to 20 m/h.

10. Process according to Claim 6 to 9, characterised in that the sheet-form structure is composed of metal or mineral fibres.

**Revendications**

1. Procédé en vue d'éliminer les alcalis de polyéther-polyols préparés par polyaddition d'oxydes d'alkylène en présence d'un catalyseur basique, caractérisé en ce que :

a) au polymère alcalin, on ajoute 1 à 20 % en poids d'eau, ainsi que 0 à 30 % en poids d'un solvant organique inerte ;

b) sans agitation ou en n'agitant que très modérant, on maintient l'émulsion ainsi formée pendant au moins une demi-heure à une température d'au moins 70 °C ;

c) on sépare la phase aqueuse ;

d) on élimine les quantités résiduelles d'alcalis de la phase organique de façon connue en soi par addition d'acides ou d'adsorbants et, par distillation, on sépare l'eau résiduelle et le solvant organique éventuellement utilisé conjointement.

2. Procédé suivant la revendication 1, caractérisé en ce que, lors de la première étape opératoire, on ajoute 2 à 10 % en poids d'eau au polymère alcalin.

3. Procédé suivant les revendications 1 et 2, caractérisé en ce que, lors de la première étape opératoire, outre l'eau, on ajoute 0 à 30 % en poids (calculé sur le polymère) de toluène.

4. Procédé suivant les revendications 1 à 3, caractérisé en ce que, lors de la deuxième étape opératoire, on maintient l'émulsion à une température de 85 à 130 °C.

5. Procédé suivant les revendications 1 à 4, caractérisé en ce que, lors de la troisième étape opératoire, on sépare les deux phases par dépôt ou sous l'influence de forces centrifuges.

6. Procédé suivant les revendications 1 à 4, caractérisé en ce que, lors de la troisième étape opératoire, on sépare les deux phases en faisant passer l'émulsion à travers une structure superficielle constituée de fibres très fines ayant un poids par unité de surface se situant entre 100 et 10 000 g/m² et une épaisseur se situant entre 1 et 100 mm.

7. Procédé suivant la revendication 6, caractérisé en ce que les fibres de la structure superficielle ont une épaisseur inférieure à 50 μm.

8. Procédé suivant la revendication 7, caractérisé en ce que les fibres ont une épaisseur de 1 à 10 μm.

9. Procédé suivant les revendications 6 à 8, caractérisé en ce que la vitesse d'écoulement de l'émulsion à travers la structure superficielle de fibres est de 1 à 20 m/h.

10. Procédé suivant les revendications 6 à 9, caractérisé en ce que la structure superficielle est constituée de fibres métalliques ou de fibres minérales.